**Europäisches Patentamt**

**European Patent Office**

**Office européen des brevets**

(11) Veröffentlichungsnummer: **0 191 922**

**A2**

(12) # EUROPÄISCHE PATENTANMELDUNG

(21) Anmeldenummer: **85115450.0**

(22) Anmeldetag: **05.12.85**

(51) Int. Cl.⁴: **F 02 D 41/40**

(30) Priorität: **16.02.85 DE 3505483**

(43) Veröffentlichungstag der Anmeldung:
**27.08.86 Patentblatt 86/35**

(84) Benannte Vertragsstaaten:
**DE FR GB IT**

(71) Anmelder: **ROBERT BOSCH GMBH**
**Postfach 50**
**D-7000 Stuttgart 1(DE)**

(72) Erfinder: **Engel, Gerhard, Dipl.-Ing.**
**Burghaldenweg 8A**
**D-7000 Stuttgart 30(DE)**

(72) Erfinder: **Fenchel, Reinhard, Dipl.-Ing.**
**Turnstrasse 31**
**D-7260 Calw-Altburg(DE)**

(72) Erfinder: **Küttner, Thomas, Dipl.-Ing.**
**Lindenbachstrasse 69**
**D-7000 Stuttgart 31(DE)**

(72) Erfinder: **Wessel, Wolf, Ing. grad.**
**Mühlstrasse 27**
**D-7141 Oberriexingen(DE)**

(54) **Verfahren und Einrichtung zur Steuerung und/oder Regelung der Kraftstoffzumessung in eine Brennkraftmaschine.**

(57) Es wird ein Verfahren und eine Einrichtung zur Steuerung und/oder Regelung der Kraftstoffzumessung in eine Brennkraftmaschine vorgeschlagen, bei der aufgrund des regelungstechnischen Gesamtkonzeptes ein optimaler zeitlicher Ablauf der Einspritzung realisiert ist, und bei der aufgrund spezieller Korrekturverfahren sämtliche dynamischen Vorgänge während der Einspritzung ebenfalls berücksichtigt sind. Es werden Blockschaltbilder des regelungstechnischen Gesamtkonzeptes beschrieben, sowie Zeitdiagramme der Zeitsteuerung erläutert. Ebenfalls sind mehrere mögliche Korrekturverfahren in Form von weiteren Zeitdiagrammen dargestellt. Abschließend sind noch weitere Möglichkeiten genannt, die der Genauigkeit und der Sicherheit der beschriebenen erfindungsgemäßen Kraftstoffzumessung dienen.

FIG.2

EP 0 191 922 A2

R.    1 9 0 3 2
13.1T.1984 Sr/Hm

ROBERT BOSCH GMBH, 7000 STUTTGART 1

Verfahren und Einrichtung zur Steuerung und/oder
Regelung der Kraftstoffzumessung in eine
Brennkraftmaschine

Stand der Technik

Bei der Erfindung handelt es sich um ein Verfahren und
eine Einrichtung zur Steuerung und/oder Regelung der Kraftstoffzumessung in eine Brennkraftmaschine nach der Gattung
des Oberbegriffs der Hauptansprüche.

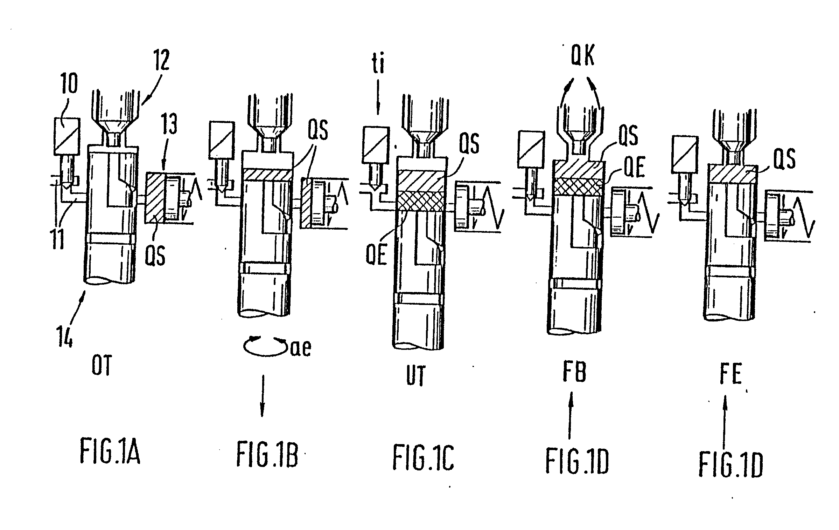

Aus der deutschen Patentanmeldung P 33 07 826.2 ist, insbesondere aus der Figur 1, eine Kraftstoffeinspritzpumpe
bekannt, die mit Hilfe eines elektrisch ansteuerbaren Zumeßventils und eines elektrisch verstellbaren Pumpenkolbens ansteuerbar ist. Das elektrisch ansteuerbare Zumeßventil, wie auch der elektrisch verstellbare Pumpenkolben werden dabei von einem elektronischen Steuergerät
beeinflußt, wobei dieses Steuergerät von Signalen bezüglich der Last der Brennkraftmaschine, der Drehzahl der
Brennkraftmaschine, usw. beaufschlagt ist. Insgesamt

...

wird also bei der bekannten Einrichtung die Kraftstoffzumessung in eine Brennkraftmaschine in Abhängigkeit von den
Betriebszustand der Brennkraftmaschine kennzeichnenden Betriebskenngrößen der Brennkraftmaschine mit Hilfe eines
elektronischen Steuergeräts beeinflußt, und mittels der
Kraftstoffeinspritzpumpe durchgeführt.

Es hat sich nun herausgestellt, daß die bisher in elektronischen Steuergeräten angewandten Steuerungs- und/oder
Regelungsverfahren im Zusammenhang mit der beschriebenen
Einrichtung zu keinen befriedigenden Ergebnissen führen.
Vor allem ist es im Zusammenhang mit der beschriebenen
Einrichtung notwendig, die bisher bekannten regelungstechnischen Gesamtkonzepte zu verbessern, und dabei vor
allem Aspekte des zeitlichen Ablaufs und der dynamischen
Vorgänge bei der beschriebenen, bekannten Einrichtung
genauer zu berücksichtigen.

Vorteile der Erfindung

Das erfindungsgemäße Verfahren, sowie die erfindungsgemäße Einrichtung zur Steuerung und/oder Regelung der Kraftstoffzumessung in eine Brennkraftmaschine mit den Merkmalen der Hauptansprüche hat gegenüber dem beschriebenen
Stand der Technik den Vorteil, daß mit ihrer Hilfe in
jedem Betriebszustand der Brennkraftmaschine eine exakte
Zumessung von Kraftstoff in die Brennkraftmaschine möglich
ist.

Dies wird dadurch erreicht, daß mit Hilfe von funktionalen
Umformungen, die in Abhängigkeit von den Betriebskenngrößen
der Brennkraftmaschine durchgeführt werden, das elektrisch
ansteuerbare Zumeßventil und der elektrisch verstellbare
Pumpenkolben der Kraftstoffeinspritzpumpe beeinflußt
werden.

...

1 0191922

Besonders vorteilhaft ist es dabei, die Lage des elektrisch verstellbaren Pumpenkolbens der Kraftstoffeinspritzpumpe zu regeln. Weitere Vorteile der erfindungsgemäßen Einrichtung bestehen in der Möglichkeit der Steuerung oder Regelung der zeitlichen Abläufe bei der Beeinflussung des Zumeßventils und der Korrektur von gegebenenfalls auftretenden Fehlern aufgrund von dynamischen Vorgängen bei der Beeinflussung der Kraftstoffeinspritzpumpe.

Weitere vorteilhafte Weiterbildungen und Verbesserungen des in den Hauptansprüchen angegebenen Verfahrens bzw. der angegebenen Einrichtung sind durch die in den Unteransprüchen aufgeführten Maßnahmen möglich.

Zeichnung

Ausführungsbeispiele der Erfindung sind in der Zeichnung dargestellt und in der nachfolgenden Beschreibung näher erläutert. Dabei zeigt Figur 1 ein Kolbenhub-Funktionsdiagramm, Figur 2 ein Blockschaltbild der Ansteuerung, Figur 3 Realisierungsmöglichkeiten der Lagesteuerung und/oder -regelung, Figur 4 Zeitdiagramme für die Zeitsteuerung und/oder -regelung, Figur 5 Details der Zeitsteuerung, Figur 6 ein Zeitdiagramm einer alternativen Zeitsteuerung und/oder -regelung, Figur 7 Realisierungsmöglichkeiten der Korrektur, Figur 8 ein Zeitdiagramm zur dritten Realisierungsmöglichkeit der Korrektur, sowie Figur 9 ein Zeitdiagramm zur vierten Realisierungsmöglichkeit der Korrektur.

Beschreibung der Ausführungsbeispiele

Bei den nachfolgend beschriebenen Ausführungsbeispielen handelt es sich um die Steuerung und/oder Regelung der Kraftstoffzumessung in eine Brennkraftmaschine.

Dabei sind die Ausführungsbeispiele im Zusammenhang mit Diesel-Brennkraftmaschine erläutert, was jedoch nicht bedeutet, daß der den Ausführungsbeispielen zugrundeliegende Erfindungsgedanke nicht auch auf andere Brennkraftmaschinentypen anwendbar wäre. Ebenfalls sind die nachfolgend beschriebenen Ausführungsbeispiele nicht auf spezielle schaltungstechnische Realisierungen beschränkt, sondern können in jeder dem Fachmann geläufigen Ausführungsweise verwirklicht werden. Es ist also möglich, den den Ausführungsbeispielen zugrundeliegenden Erfindungsgedanken in der Form von analogen Schaltungen, digitalen Schaltungen, mit Hilfe von entsprechend programmierten Recheneinrichtungen, in der Form von Kombinationen dieser genannten Möglichkeiten, usw. in einen entsprechenden, erfindungsgemäßen Gegenstand umzusetzen.

Figur 1 zeigt ein Kolbenhub-Funktionsdiagramm. In dieser Figur 1 ist ein Zumeßventil 10 so angeordnet, daß es eine Zuleitung 11 öffnen oder schließen kann. Weiter ist in der Figur 1 ein Druckventil 12 dargestellt, das in seinem geöffneten Zustand die Verbindung von der Kraftstoffeinspritzpumpe zur Einspritzdüse freigibt. Mit der Kennziffer 13 ist in der Figur 1 ein Rückführspeicher gekennzeichnet, der in bekannter Weise aus einem Stempel, aus einer Feder usw. besteht. Zuletzt trägt ein Pumpenkolben das Kennzeichen 14, wobei dieser Pumpenkolben 14 verschiedene Nuten, Kanten und Bohrungen umfaßt. Der Gegenstand der Figur 1 gehört zum beschriebenen Stand der Technik. Genauere Erläuterungen zum Gegenstand der Figur 1 sind deshalb der dort genannten deutschen Patentanmeldung P 33 07 826.2 zu entnehmen.

Die Figur 1 zeigt insgesamt fünf zeitlich aufeinanderfolgende Zustände des dargestellten Gegenstands. In der Figur 1a ist der Pumpenkolben in seinem oberen Totpunkt OT, die Figur 1b zeigt den Pumpenkolben 14 in seiner Abwärtsbewegung, in der Figur 1c befindet sich der Pum-

...

penkolben 14 in seinem unteren Totpunkt UT, während zuletzt in der Figur 1d und der Figur 1e der Pumpenkolben 14 sich nach oben bewegt, wobei die Figur 1d den Förderbeginn FB und die Figur 1e das Förderende FE von Kraftstoff zur Brennkraftmaschine zeigt. Im zeitlichen Ablauf würde nach dem Zustand, der in der Figur 1e dargestellt ist, wieder der in der Figur 1a gezeigte obere Totpunkt OT des Pumpenkolbens 14 folgen.

In der Figur 1 handelt es sich bei den einfach schraffierten Flächen jeweils um die Sockelmenge QS, während die doppelt schraffierten Flächen jeweils die Zumeßmenge QE darstellen. Mit QK ist in der Figur 1 die Einspritzmenge, also die tatsächlich der Brennkraftmaschine eingespritzte Kraftstoffmenge bezeichnet. Abschließend ist in der Figur 1 die Beeinflussung des Zumeßventils 10 mit Hilfe des elektrischen Signals ti, sowie die Beeinflussung des Pumpenkolbens 14 mittels des elektrischen Signals ae angedeutet.

Befindet sich der Pumpenkolben 14 in seinem oberen Totpunkt OT, so enthält der Rückführspeicher 13 die gesamte Sockelmenge QS (Figur 1a). Bewegt sich der Pumpenkolben 14 nach unten, so wird die Sockelmenge QS wieder aus dem Rückführspeicher 13 verdrängt (Figur 1b). Während der Zeitdauer, in der sich der Pumpenkolben 14 in seinem unteren Totpunkt UT befindet, öffnet das Zumeßventil 10 die Zuleitung 11 für eine bestimmte, vom Signal ti abhängige Zeitdauer, wodurch die Zumeßmenge QE dem Pumpenelement zugeführt wird (Figur 1c). Während seiner Aufwärtsbewegung wird die sich im Pumpenelement befindende Kraftstoffmenge, die aus der Sockelmenge QS und der Zumeßmenge QE besteht, komprimiert, so daß zu einem bestimmten Zeitpunkt, nämlich dem Förderbeginn FB, der abhängig ist von QS und QE, das Druckventil 12 öffnet, und dadurch die Einspritzmenge QK über die Einspritzdüse dem Brennraum der Brennkraftmaschine zugeführt wird (Figur 1d). Abhängig von der Winkelstellung

...

des Pumpenkolbens 14, damit abhängig vom Signal ae, schließt
das Druckventil 12 wieder, und das Förderende FE ist erreicht (Figur 1e). Die im Pumpenelement verbleibende Sockelmenge QS wird dann im Verlauf der restlichen Aufwärtsbewegung des Pumpenkolbens 14 wieder in den Rückführspeicher
13 verdrängt, und der gesamte Kreislauf beginnt wieder
von vorne.

Im stationären Fall, also bei gleichbleibenden Signalen
ti und ae, verändert sich die Sockelmenge QS nicht, es
gilt also: QS = konstant. Dadurch entspricht die Einspritzmenge QK, also die tatsächlich der Brennkraftmaschine eingespritzte Kraftstoffmenge genau der Zumeßmenge QE, es gilt
also: QK = QE. Da nun des weiteren die Zumeßmenge QE direkt
abhängig ist vom Signal ti, kann also im stationären Fall
die tatsächlich der Brennkraftmaschine eingespritzte Kraftstoffmenge QK direkt durch das Signal ti vorgegeben werden.
Gleichzeitig ist im stationären Fall das Förderende FE
direkt abhängig vom Signal ae, und deshalb ebenfalls eindeutig definiert.

Es sei nun angenommen, daß das Förderende FE mit Hilfe des
Signals ae verändert werden soll, daß also die Winkelstellung des Pumpenkolbens 14 so beeinflußt werden soll, daß
das Förderende FE z.B. später auftritt. Eine derartige
Veränderung der Winkelstellung des Pumpenkolbens 14 hat
nun im ersten Moment zur Folge, daß sich die tatsächlich
der Brennkraftmaschine eingespritzte Kraftstoffmenge QK
erhöht, während sich demzufolge die Sockelmenge QS im
gleichen Maß erniedrigt. Dies bedeutet, daß bei weiterhin konstanter Zumeßmenge QE die Gleichheit von Zumeßmenge QE und Einspritzmenge QK nicht mehr gegeben ist.
Da es nun jedoch erwünscht ist, daß die Einspritzmenge
QK in jedem Betriebszustand der Brennkraftmaschine eindeutig vorgebbar ist, muß die Zumeßmenge QE in dem beschriebenen Fall einer dynamischen Veränderung des Förderendes FE korrigiert werden. Dies wird dadurch erreicht,

...

daß die gewünschte, der Brennkraftmaschine einzuspritzende
Krafstoffmenge während des Betriebszustands einer dynamischen Veränderung der Kraftstoffzumessung mit Hilfe einer
Korrektureinrichtung beeinflußt, und davon abhängig dann
die Zumeßmenge QE bestimmt wird.

Bezeichnet man die gewünschte, der Brennkraftmaschine einzuspritzende Kraftstoffmenge, also kurz die Wunschmenge
mit dem Kennzeichen QW, sowie eine Kraftstoffmenge infolge
der dynamischen Korrektur mit dem Kennzeichen QD, so gelten im stationären Betriebszustand der Brennkraftmaschine
die folgenden Beziehungen:

$$QK = QW = QE$$

$$QD = 0$$

$$QS = Konstant.$$

Während der Zeitdauer des Betriebszustands von dynamischen
Veränderungen der Kraftstoffzumessung in die Brennkraftmaschine hingegen gelten die folgenden Beziehungen:

$$QK = QW$$

$$QE = QW + QD$$

$$QD \neq 0$$

$$QS \neq Konstant.$$

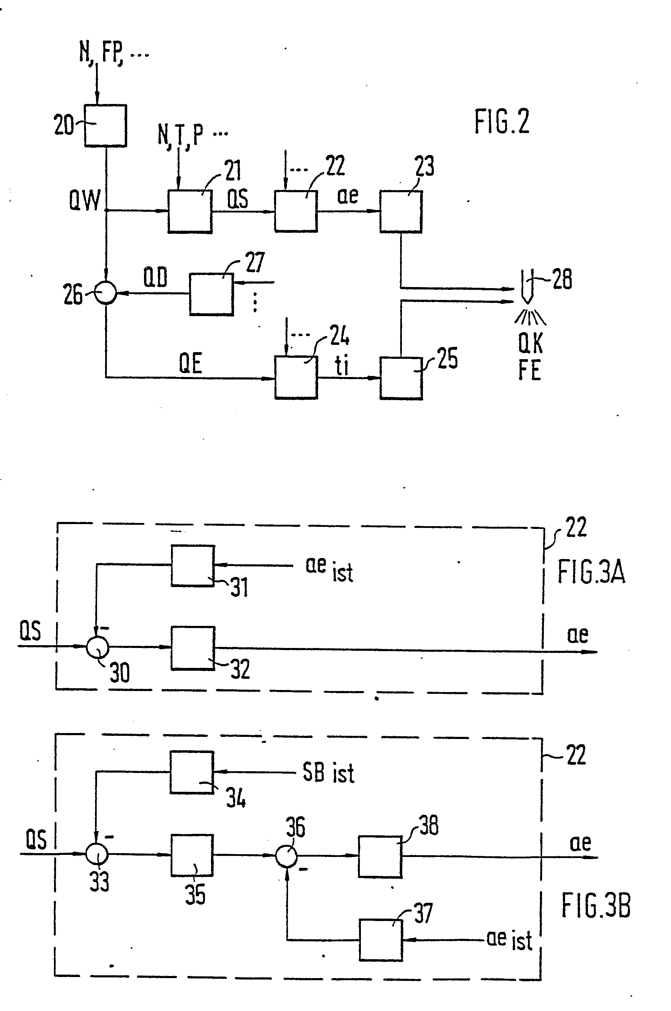

Figur 2 zeigt ein Blockschaltbild der Ansteuerung. In dieser
Figur 2 sind mit den beiden Bezugsziffern 20 und 21 zwei
voneinander verschiedene funktionale Umformungen gekennzeichnet. Die funktionale Umformung 20 ist dabei hauptsächlich von der Drehzahl der Brennkraftmaschine N und der
Stellung FP des Fahrpedals der Brennkraftmaschine abhängig,
während die funktionale Umformung 21 hauptsächlich von
Signalen bezüglich der Drehzahl der Brennkraftmaschine N,
der Temperatur der Brennkraftmaschine bzw. der Temperatur
der angesaugten Luft T, sowie z.B. dem Druck im Ansaugrohr

...

der Brennkraftmaschine bzw. dem Atmosphärendruck P beaufschlagt ist. Das Ausgangssignal der funktionalen Umformung
20 stellt die gewünschte, der Brennkraftmaschine einzuspritzende Kraftstoffmenge, also die Wunschmenge QW dar. Dieses
Ausgangssignal QW ist zum einen der funktionalen Umformung
21, sowie zum anderen einer Summation 26 zugeführt. Bei dem
Ausgangssignal der funktionalen Umformung 21 hingegen handelt es sich um die Sockelmenge QS. Abhängig von dieser
Sockelmenge QS, sowie von anderen, den Betriebszustand
der Brennkraftmaschine charakterisierenden Betriebskenngrößen, bildet eine Lagesteuerung und/oder -regelung 22
ein Ausgangssignal, das den Stellwinkel des Pumpenkolbens
14 darstellt und das mit ae bezeichnet ist. Abschließend
beeinflußt das Stellwerk 23 für den Pumpenkolben 14 in
Abhängigkeit vom Signal ae die Stellung des Pumpenkolbens
14, und somit das Förderende FE. In Abhängigkeit vom Betriebszustand der Brennkraftmaschine erzeugt eine Korrektur
27 ein Ausgangssignal, das der dynamischen Korrekturmenge
QD entspricht, und das der Summation 26 zugeleitet ist.
Die zuletzt genannte Summation 26 bildet aus ihren beiden
Eingangssignalen QW und QD ein Ausgangssignal, das mit
QE bezeichnet ist, und das der Zumeßmenge QE entspricht.
Dieses Signal QE ist an eine Zeitsteuerung und/oder -regelung 24 angeschlossen, die des weiteren noch von den
Betriebszustand der Brennkraftmaschine kennzeichnenden
Betriebskenngrößen beaufschlagt ist. In Abhängigkeit
von ihren Eingangssignalen bildet diese Zeitsteuerung und/
oder -regelung ein Ausgangssignal, das die Einspritzdauer
des Zumeßventils 10 bestimmt, und das mit ti gekennzeichnet
ist. Mit Hilfe einer Endstufe 25 für das Zumeßventil 10
wird dann in Abhängigkeit von dem die Endstufe beaufschlagenden Signal ti das Zumeßventil 10 beeinflußt. Zuletzt ist in der Figur 2 mit der Bezugsziffer 28 eine
Einspritzdüse gekennzeichnet, wobei die Zuführung von
Kraftstoff über diese Einspritzdüse 28 in einen Brennraum der Brennkraftmaschine eindeutig definiert ist durch
die tatsächlich eingespritzte Kraftstoffmenge QK und

. . .

durch das Förderende FE der Einspritzung. Es sei noch darauf hingewiesen, daß gleichlautende Bezeichnungen der Figur 1 und der Figur 2 auch gleiche Bedeutungen haben.

Wie dies schon im Zusammenhang mit der Figur 1 beschrieben wurde, verändern sich die beiden Signale ae und ti im stationären Betriebszustand der Brennkraftmaschine nicht. Dies bedeutet, daß auch die Einspritzmenge QK und das Förderende FE konstant bleiben. Wie ebenfalls im Zusammenhang mit der Figur 1 schon ausgeführt wurde, muß hingegen bei einer Veränderung des Stellwinkels des Pumpenkolbens 14, also einer Veränderung des Signals ae, auch die Einspritzdauer des Zumeßventils 10, also das Signal ti korrigiert werden. Dies geschieht dadurch, daß das Signal QD, das im stationären Fall gleich Null ist, mit dem Signal QW verknüpft wird, und dadurch die Zumeßmenge QE verändert wird.

In allen Betriebszuständen der Brennkraftmaschine, also im stationären, wie auch im dynamischen Fall, gilt nun die folgende Beziehung:

$$QK = QW = f(N, FP, \ldots).$$

Ebenfalls in allen Betriebszuständen der Brennkraftmaschine besteht der folgende Zusammenhang:

$$FE = f(QS) = f(QW, \ldots).$$

Insgesamt hat dies zur Folge, daß in allen Betriebszuständen der Brennkraftmaschine die tatsächlich der Brennkraftmaschine eingespritzte Kraftstoffmenge QK und das Förderende FE der Einspritzung wenigstens abhängig sind von der Drehzahl der Brennkraftmaschine N, sowie der Stellung FP des Fahrpedals der Brennkraftmaschine. Dabei ist jedoch gleichzeitig in allen Betriebszuständen der

...

Brennkraftmaschine ein eindeutiger Zusammenhang zwischen der Einspritzmenge QK, dem Förderende FE und der Drehzahl N, sowie der Stellung des Fahrpedals FP gegeben, wobei dieser Zusammenhang mit Hilfe der funktionalen Umformungen 20 und 21 festgelegt werden kann. Besonders vorteilhaft ist es dabei, diese funktionalen Umformungen 20 und 21 in Form von wenigstens zweidimensionalen Kennfeldern zu realisieren.

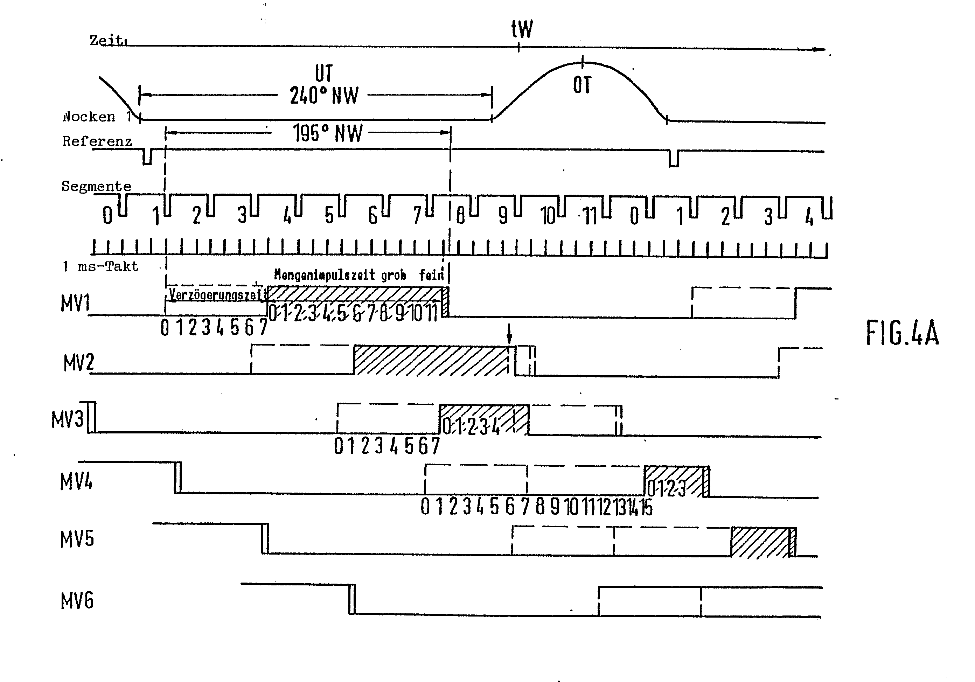

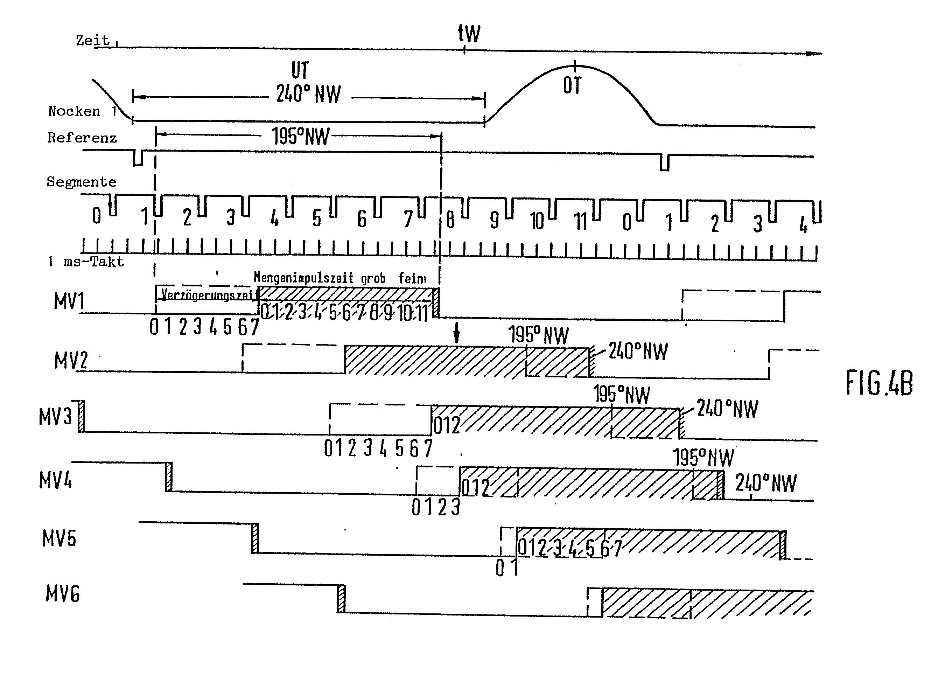

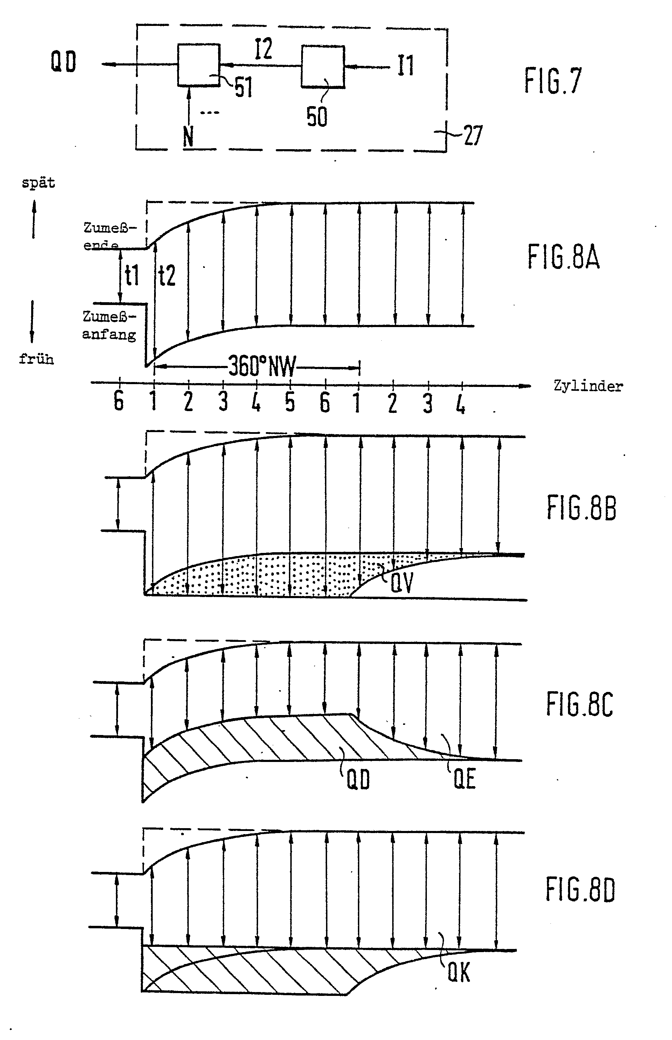

Die Lagesteuerung und/oder -regelung 22 der Figur 2 soll nun im folgenden Text mit Hilfe der Figur 3 beschrieben werden, die Zeitsteuerung und/oder -regelung 24 mit Hilfe der Figuren 4, 5 und 6, sowie die Korrektur 27 der Figur 2 mit Hilfe der Figuren 7, 8 und 9. Für genauere Informationen über diese drei Bauelemente der Figur 2 ist deshalb die entsprechende Beschreibung der genannten Figuren heranzuziehen. Bei dem Stellwerk 23 für den Pumpenkolben 14 und bei der Endstufe 25 für das Zumeßventil 10 handelt es sich um Einrichtungen, die zum Stand der Technik gehören, und deshalb dem Fachmann geläufig sind. Diese beiden zuletzt genannten Elemente der Figur 2 sollen deshalb nicht näher erläutert werden.

Figur 3 zeigt Realisierungsmöglichkeiten der Lagesteuerung und/oder -regelung 22. Dabei wird in der Figur 3a eine Summation 30 einerseits vom Signal QS bezüglich der Sockelmenge, sowie andererseits von dem Ausgangssignal einer Anpassung 31 beaufschlagt. Das Eingangssignal dieser Anpassung 31 bildet dabei ein Signal bezüglich des tatsächlichen Stellwinkels des Pumpenkolbens 14, das mit aeist bezeichnet ist. Eine Regelung 32 wird von dem Ausgangssignal der Summation 30 angesteuert, und erzeugt davon abhängig ein Signal ae.

Demgegenüber wird in der Figur 3b eine Summation 33 einerseits von dem Signal QS, sowie andererseits von dem Ausgangssignal einer Anpassung 34 angesteuert, wobei die

...

zuletzt genannte Anpassung 34 mit einem Signal bezüglich
des tatsächlichen Spritzbeginns SBist beaufschlagt ist.
Das Ausgangssignal der Summation 33 ist an eine Regelung
35 angeschlossen, die in Abhängigkeit von diesem Eingangssignal ein Ausgangssignal bildet, das an eine weitere
Summation 36 angeschlossen ist. Als weiteres Eingangssignal ist der Summation 36 das Ausgangssignal einer
weiteren Anpassung 37 zugeleitet. Die zuletzt genannte
Anpassung 37 ist dabei abhängig von einem Signal bezüglich des tatsächlichen Stellwinkels des Pumpenkolbens
14, wobei dieses Signal wieder mit aeist gekennzeichnet
ist. Die Summation 36 verknüpft ihre beiden Eingangssignale, und beaufschlagt dann mit dem daraus gewonnenen
Verknüpfungssignal eine weitere Regelung 38. Das Ausgangssignal der Regelung 38 ist dann das Signal ae.

Bei den beiden in den Figuren 3a und 3b auftretenden Signalen aeist und SBist handelt es sich um Istwertsignale,
also um Signale, die den tatsächlichen Zustand von bestimmten Parametern der Kraftstoffeinspritzpumpe widerspiegeln. Dabei handelt es sich bei dem Signal aeist,
wie schon erwähnt, um den tatsächlichen Stellwinkel des
Pumpenkolbens 14. Dieses Signal aeist kann z.B. mit Hilfe
eines induktiven Weggebers an der den Stellwinkel des
Pumpenkolbens 14 bestimmenden Regelstange gewonnen werden. Bei dem Signal SBist handelt es sich, wie ebenfalls schon erwähnt wurde, um ein Signal bezüglich des
tatsächlichen Spritzbeginns. Unter Spritzbeginn wird
in diesem Zusammenhang der Zeitpunkt verstanden, in dem
die Einspritzdüse 28 der Figur 1 die Kraftstoffzufuhr
in den Brennraum der Brennkraftmaschine öffnet. Der
Spritzbeginn liegt also zeitlich gesehen normalerweise
eine kurze Zeit nach dem Förderbeginn, da die von der
Kraftstoffeinspritzpumpe erzeugte Druckwelle eine endliche
Zeit benötigt, um über eine Hochdruckleitung von der
Kraftstoffeinspritzpumpe zur Einspritzdüse zu gelangen.
Das Signal SBist kann z.B. mit Hilfe eines induktiven

...

Spritzbeginnsensors, der die Bewegung der Düsennadel in
der Einspritzdüse mißt, aufgenommen werden.

Bei dem Gegenstand der Figur 3a handelt es sich um einen
an sich bekannten Lageregelkreis, der den tatsächlichen
Stellwinkel aeist des Pumpenkolbens 14 auf einen mit Hilfe
des Signals QS definierten Sollwert einregelt. Demgegenüber
weist der Gegenstand der Figur 3b zusätzlich zu dem bekannten Lageregelkreis noch einen weiteren, überlagerten Regelkreis auf. Mit Hilfe des überlagerten Regelkreises wird
der Sollwert des Lageregelkreises, also das Ausgangssignal des Elementes 35 der Figur 3b nicht fest vorgegeben, sondern in Abhängigkeit vom tatsächlichen Spritzbeginn SBist nachgeregelt. Das Signal QS hat im Zusammenhang mit der Figur 3b daher die Bedeutung eines gewünschten
Spritzbeginns.

Bei einer Realisierung der Lagesteuerung und/oder -regelung 22 der Figur 2 gemäß dem Blockschaltbild der Figur 3b
ist es daher möglich, nicht nur den Stellwinkel des Pumpenkolbens 14 auf seinen gewünschten Wert einzuregeln, und
damit das tatsächliche Förderende auf einen gewünschten
Wert festzulegen, sondern aufgrund des überlagerten Regelkreises kann gleichzeitig der Spritzbeginn auf gewünschte,
optimale Werte gesteuert werden. Dies ist insbesondere aufgrund der Tatsache, daß der Spritzbeginn einen großen Einfluß auf den Verlauf der Verbrennung hat, besonders vorteilhaft.

Figur 4 zeigt Zeitdiagramme für die Zeitsteuerung und/oder
-regelung 24. Dabei ist in Figur 4a ein Sprung der einzuspritzenden Kraftstoffmenge zu kleineren Werten dargestellt, während die Figur 4b einen Sprung der einzuspritzenden Kraftstoffmenge hin zu größeren Werten zeigt.
In beiden Figuren ist zu oberst die Zeitachse aufgetragen,
wobei auf dieser Achse der Zeitpunkt des Lastwechsels,

. . .

also der Zeitpunkt des Sprungs hin zu kleineren bzw. größeren Kraftstoffmengen, mit der Bezeichnung tW gekennzeichnet ist. Darunter ist die zeitliche Abwicklung des Nockens 1 gezeigt, wobei dieser Nocken 1 zum Zylinder 1 und damit auch zum Magnetventil 1 gehört. Mit dem Ausdruck Referenz ist ein Signal bezeichnet, das einmal pro Nockenwellen-Umdrehung auftritt, und das deshalb dazu verwendet werden kann, die einzelnen Zylinder voneinander zu unterscheiden. In den vorliegenden beiden Figuren 4a und 4b befindet sich das Referenzsignal eindeutig zwischen den nachfolgend erläuterten Segmentimpulsen 0 und 1 etwa in einem Bereich am Ende des Auftretens des Nockens 1, jedoch unabhängig von der Zuordnung des Nockenendes zum Segmentsignal. Es ist also möglich, mittels dieses speziellen Referenzsignals eindeutig den Nocken 1 zu erkennen. Für die Berechnung der Drehzahl der Brennkraftmaschine wird das Signal herangezogen, das in der Figur 4 mit dem Ausdruck Segmente gekennzeichnet ist. In den beiden Zeitdiagrammen der Figur 4 weist das Segmentsignal insgesamt 12 Segmente pro Nockenwellenumdrehung auf, die doppelte Zylinderanzahl. Da es sich also bei der im Ausführungsbeispiel beschriebenen Brennkraftmaschine um eine sechs-zylindrische Brennkraftmaschine handelt, hat dies zur Folge, daß mit Hilfe des Segmentsignals die einzelnen Zylinder der Brennkraftmaschine identifiziert werden können, da der Abstand der einzelnen Zylinder voneinander immer genau zwei Segmente beträgt. Weiter ist in den beiden Figuren 4a und 4b auch noch ein 1 ms-Takt aufgetragen. Dieser Takt dient, wie dies später noch dargestellt werden soll, der vereinfachten Zeitauszählung. Insgesamt ist es also mit Hilfe des Referenzsignals und des Segmentsignals möglich, jeden einzelnen Zylinder der Brennkraftmaschine zu identifizieren und ihm eine Nummer zuzuordnen.

...

Als nächstes ist in den beiden Figuren 4a und 4b ein Signal dargestellt, das mit MV1 bezeichnet ist, und mit dem das Magnetventil 1, also das zum Zylinder 1 und zum Nocken 1 gehörende Magnetventil angesteuert wird. Betrachtet man die Abwicklung des Nockens 1 in den beiden Figuren 4a und 4b, so ist daraus der Zeitbereich zu entnehmen, in dem der Pumpenkolben 14 in seinem unteren Totpunkt UT verweilt, um dann aufgrund des Anstiegs des Nockens bis zu seinem oberen Totpunkt OT angehoben zu werden und dann wieder abzufallen. Wie auch schon im Zusammenhang mit der Figur 1 ausgeführt wurde, liegt die eigentliche Einspritzung von Kraftstoff in die Brennkraftmaschine, also der Zeitpunkt des Förderbeginns FB und des Förderendes FE im Zeitbereich des Anstiegs des Nockens, also kurz vor dessen oberen Totpunkt OT. Aus diesem Grund muß die Zumessung von Kraftstoff in das Pumpenelement vor dem Anstieg des Nockens stattfinden, also in dem Zeitbereich, in dem sich der Pumpenkolben in seinem unteren Totpunkt UT befindet. Dieser Zeitbereich umfaßt in diesem Ausführungsbeispiel einen Winkel von 240° NW, wobei mit den Buchstaben NW angedeutet werden soll, daß es sich um einen Nockenwellenwinkel handelt. Berücksichtigt man Fertigungstoleranzen, notwendige Korrekturen, usw., so bleibt als möglicher Zumeßbereich ein Zeitbereich übrig, der einen Nockenwellenwinkel von 195° NW entspricht. Dieser Zumeßbereich ist in den beiden Figuren 4a und 4b im Zusammenhang mit der Abwicklung des Nockens 1 angedeutet. Vom zeitlichen Ablauf her werden also zuerst mit Hilfe des Referenzsignals die einzelnen Segmentimpulse des Segmentsignals durchnumeriert, beginnend mit 1 für den Segmentimpuls direkt nach dem Referenzsignal. Jeder ungeradzahlige Segmentimpuls stellt dabei eine Bezugsmarke für einen bestimmten Zylinder dar, so der Segmentimpuls 1 für den Zylinder 1, der Segmentimpuls 3 für den Zylinder 2, usw. Danach wird durch jede Bezugsmarke also durch jeden auftretenden ungeradzahligen Segmentimpuls der zum jeweiligen Zylinder gehörende Zeitbereich der 195° NW gestartet. Zu diesem Zweck muß jedoch zuvor der genannte Nocken-

0191922

wellenwinkelbereich in Abhängigkeit von der Drehzahl der Brennkraftmaschine in eine Zeitdauer umgerechnet werden. Da es sich bei den bisherigen Vorgängen um den Nocken 1 und damit um den Zylinder 1 gehandelt hat, ist also jetzt bekannt, in welchem Zeitbereich das zum Zylinder 1 gehörende Magnetventil MV1 Kraftstoff in das zugehörige Pumpenelement zumessen kann. Wie den beiden Figuren 4a und 4b entnommen werden kann, wird dieser Zumeßzeitbereich in eine Verzögerungszeit und eine Mengenimpulszeit aufgeteilt. Dabei liegt die Mengenimpulszeit immer am Ende des Zumeßzeitbereichs. Dies hat den Vorteil, daß auf Änderungen der gewünschten, zuzumessenden Kraftstoffmenge noch möglichst spät reagiert werden kann. Zu diesem Zweck wird die Mengenimpulszeit, die der Einspritzdauer ti des Zumeßventils 10 entspricht und daher bekannt ist, von der ebenfalls bekannten, für die gesamte Zumessung zur Verfügung stehenden Zeitdauer abgezogen, um als Ergebnis die Verzögerungszeit zu erhalten. Diese Verzögerungszeit wird dann jedoch nicht direkt im Anschluß an das Segmentsignal gestartet, sondern, wie schon erwähnt wurde, zur einfacheren Auszählung erst mit Auftreten des nächsten, dem Segmentsignal folgenden 1 ms-Signal. Des weiteren wird die Verzögerungszeit auf ein ganzzahliges Vielfaches von 1 ms auf- oder abgerundet, so daß auch das Ende der Verzögerungszeit exakt mit einem 1 ms-Signal zusammenfällt. Für die Verzögerungszeit ist es deshalb nur notwendig, in dem im Beispiel gewählten 1 ms-Raster zu zählen. Im Zusammenhang mit der Mengenimpulszeit hingegen ist eine derartige Auf- oder Abrundung aufgrund der Anforderungen an die Genauigkeit der Kraftstoffzumessung nicht zulässig. Aus diesem Grund wird bei der Mengenimpulszeit zuerst im 1 ms-Raster grob gezählt, um dann den verbleibenden Rest zur gesamten, exakten Mengenimpulszeit z.B. in einem 4-Mikrosekunden-Feinraster genau auszuzählen. Insgesamt wird also die

...

Verzögerungszeit so gewählt, daß sie mittels eines Grobrasters ausgezählt werden kann, wohingegen die Mengenimpulszeit zuerst mit dem gleichen Grobraster gezählt wird, um dann den exakten Wert der Mengenimpulszeit mittels eines Feinrasters zu erreichen. Die Verzögerungszeit ist dabei so gewählt, daß die Summe aus Verzögerungszeit und Mengenimpulszeit gerade die drehzahlabhängige Zeitdauer des beschriebenen 195° NW Bereichs ergibt.

Die in den beiden Figuren 4a und 4b des weiteren dargestellten Signale MV2 bis MV6 zur Ansteuerung der Magnetventile der Zylinder 2 bis 6 entsprechen prinzipiell dem Signal MV1. Im Gegensatz jedoch zum Signal MV1 unterscheiden sich die Signale MV2 bis MV6 in den beiden Figuren 4a und 4b. Dies liegt daran, daß in der Figur 4a ab dem Zeitpunkt tW weniger Kraftstoff zugeführt werden soll, während in der Figur 4b mehr Kraftstoff gewünscht ist. Der Zeitpunkt tW ist im Zusammenhang mit dem Signal MV2 jeweils nochmals durch einen Pfeil gekennzeichnet.

Wie aus der Figur 4a zu entnehmen ist, tritt der Zeitpunkt des Lastwechsels tW während der Mengenimpulszeit des Signals MV2 und des Signals MV3 auf. Da im Zusammenhang mit der Figur 4a nach dem Zeitpunkt des Lastwechsels weniger Kraftstoffmenge gewünscht ist, wird bei den beiden Signalen MV2 und MV3 direkt nach dem Zeitpunkt tW die Mengenimpulszeit abgebrochen. Der Abbruch erfolgt dabei in dem 1 ms-Grobraster, wobei, wie später noch erläutert werden soll, immer nur ein Magnetventil in einem Zeitpunkt seine Lage ändert. Gemäß der Figur 4a wird deshalb die Mengenimpulszeit des Signals MV2 direkt nach dem Zeitpunkt tW im 1 ms-Raster abgebrochen, während das Signal MV3 eine weitere Millisekunde später endet. Bei den die Magnetventile der Zylinder 4, 5 und 6 ansteuernden Signale MV4, MV5 und MV6 fällt der Zeitpunkt

. . .

des Lastwechsels tW nicht in ihre Mengenimpulszeit. Aus
diesem Grund ist es bei den zuletzt genannten Signalen
möglich, die Verzögerungszeit so zu verlängern, daß die
dem neuen Kraftstoffmengenwunsch entsprechende Mengenimpulszeit wieder an das Ende des 195$^\circ$ NW Bereichs gelangt.
Insgesamt ergibt sich also aufgrund des Lastwechsels im
Zeitpunkt tW nur für die beiden Signale MV2 und MV3
eine Änderung des normalen Ablaufs, nämlich der Abbruch
ihrer jeweiligen Impulszeit. Dieser Abbruch kann dabei
während der Mengenimpulszeit beliebig früh erfolgen. Liegt
der Lastwechsel vor der Mengenimpulszeit, also in der
Verzögerungszeit, so wird, wie bei den Signalen MV4, usw
dargestellt, die Verzögerungszeit so verlängert, daß die
jetzt aufgrund des verminderten Kraftstoffmengenwunsches
kürzere Mengenimpulszeit wieder an das Ende des 195$^\circ$ NW
Bereichs gelangt.

In der Figur 4b sind, wie schon erwähnt wurde, die Signale
zur Ansteuerung der Magnetventile der Brennkraftmaschine
bei einem Sprung der gewünschten, zuzumessenden Kraftstoffmenge zu größeren Werten im Zeitpunkt tW dargestellt.
Wie der Figur 4b zu entnehmen ist, befindet sich der Zeitpunkt tW nach dem Ende der Mengenimpulszeit des Signals
MV1, jedoch während der Mengenimpulszeit der Signale
MV2 und MV3, sowie vor der Mengenimpulszeit des Signals
MV4. Dies hat zur Folge, daß bereits bei der Zumessung
von Kraftstoff in den Zylinder 2 der Brennkraftmaschine
ein Teil der gewünschten Kraftstoffmengenerhöhung berücksichtigt werden kann. Da nun aus Gründen, die schon ausgeführt wurden, die eigentliche Mengenimpulszeit schon an
das Ende des 195$^\circ$ NW Bereichs gelegt worden ist, kann diese
eigentliche Mengenimpulszeit nicht mehr beliebig verlängert werden. Als maximale Grenze für die Zumessung
von Kraftstoff in das Pumpenelement ist dabei das Ende
des Bereichs des unteren Totpunkts UT vorgegeben, also der im Zusammenhang mit der Abwicklung des Nockens 1 dargestellte 240° NW Bereich. Wie dem Signal MV2 der Figur 4b zu entnehmen ist, wird deshalb die Mengenimpulszeit des Signals MV2 über das Ende des 195° NW-Bereichs hinaus erweitert bis zu der durch den 240° NW-Bereich festgelegten Grenze. Diese Grenze ist aus dem vorhandenen, durchnumerierten Segmentsignal herleitbar. Die gleiche Verlängerung der Mengenimpulszeit bis zu ihrer maximalen Grenze findet beim Signal MV3 statt. Beim Signal MV4 tritt der Zeitpunkt tW während der eigentlichen Verzögerungszeit ein, so daß es bei diesem Signal möglich ist, die Verzögerungszeit innerhalb des 1 ms-Rasters abzubrechen und die Mengenimpulszeit möglichst direkt nach dem Zeitpunkt tW beginnen zu lassen. Aufgrund dieses Abbruchs der Verzögerungszeit und der dadurch hervorgerufenen vorgezogenen Mengenimpulszeit ist es nun nicht mehr notwendig, aufgrund der gewünschten Kraftstoffmengenerhöhung die Mengenimpulszeit bis zu der durch den 240° NW-Bereich festgelegten maximalen Grenze zu verlängern, sondern es genügt, die Mengenimpulszeit nur eine geringe Zeit über den 195° MW-Bereich hinaus andauern zu lassen. Im Zusammenhang mit dem beschriebenen zeitlichen Ablauf sei nochmals auf das Signal MV4 der Figur 4b hingewiesen. In dieser Figur 4b bricht das Signal MV4 kurz nach dem durch den Pfeil gekennzeichneten Zeitpunkt tW seine Verzögerungszeit ab, womit seine Mengenimpulszeit beginnt. Während dieser Mengenimpulszeit wird dann die Länge dieser Mengenimpulszeit berechnet, um schließlich vor der maximalen Grenze die Mengenimpulszeit entsprechend dem berechneten Wert zu enden. Die Signale MV5 und MV6 entsprechen prinzipiell wieder dem Signal MV1, nur daß jetzt, aufgrund der gewünschten Kraftstoffmengenerhöhung die Verzögerungszeit verkürzt und die Mengenimpulszeit entsprechend verlängert worden ist.

Abschließend soll zu den beiden Figuren 4a und 4b noch bemerkt werden, daß diese den ungünstigen Fall hoher Drehzahl und großer gewünschter Kraftstoffmenge zeigen, daß es deshalb möglich ist, daß mehrere Signale zur Ansteuerung der Magnetventile der Brennkraftmaschine gleichzeitig den gleichen Zustand aufweisen, daß also gleichzeitig z.B. mehrere Magnetventile geöffnet sind und dadurch Kraftstoff in die entsprechenden Pumpenelemente zugemessen wird. Im Falle derartiger Überlappungen der Magnetventil-Ansteuersignale ist es dann ganz vom Zeitpunkt einer Laständerung abhängig, wie diese Laständerung die einzelnen Magnetventil-Ansteuersignale verändert. Die Figuren 4a und 4b zeigen beispielhaft zwei mögliche Lastzustandsänderungen zu bestimmten Zeitpunkten. Alle möglichen anderen Laständerungen bewirken dann entsprechende analoge Änderungen der Magnetventil-Ansteuersignale.

In besonders vorteilhafter Weise ist es möglich, die in der Figur 4 dargestellten Zeitdiagramme mit Hilfe eines entsprechend programmierten elektronischen Rechengeräts zu realisieren. Dabei kann z.B. das Grobraster der Verzögerungszeit und der Mengenimpulszeit mit Hilfe eines durch Programmierung realisierten Zählers verwirklicht werden, während das Feinraster z.B. mit Hilfe eines fest verdrahteten Zählers abgezählt wird. Es ist dabei möglich, jedem Magnetventil-Ansteuersignal einen eigenen, programmierten Zähler zuzuordnen. Die einzelnen Funktionen, wie z.B. das Öffnen und das Schließen des Magnetventils, können dann z.B. mit Hilfe von Unterbrechungsprogrammen realisiert werden, wobei diese Unterbrechungsprogramme von den einzelnen Zählern aktiviert werden können. Insgesamt stellt die Umsetzung der in der Figur 4 dargestellten Zeitdiagramme für einen Fachmann kein grundlegendes Problem dar, und soll deshalb auch nicht näher erläutert werden.

Wie schon im Zusammenhang mit der Beschreibung der Figur 4 erwähnt wurde, ist es sinnvoll oder gegebenenfalls gar notwendig, zur Vermeidung z.B. von hohen induktiven Belastungen, die Ein- und Ausschaltzeitpunkte der einzelnen Magnetventile so zu wählen, daß immer nur ein einziges Magnetventil umgeschaltet wird. Auch muß bei der Realisierung der Zeitdiagramme der Figur 4 z.B. mit Hilfe eines elektronischen Rechengeräts mit entsprechend programmierten Zählern gewährleistet sein, daß die Zähler immer richtig zurückgesetzt werden, so daß unter keinen Umständen ein Zähler z.B. ein falsches Öffnen eines Magnetventils bewirkt.

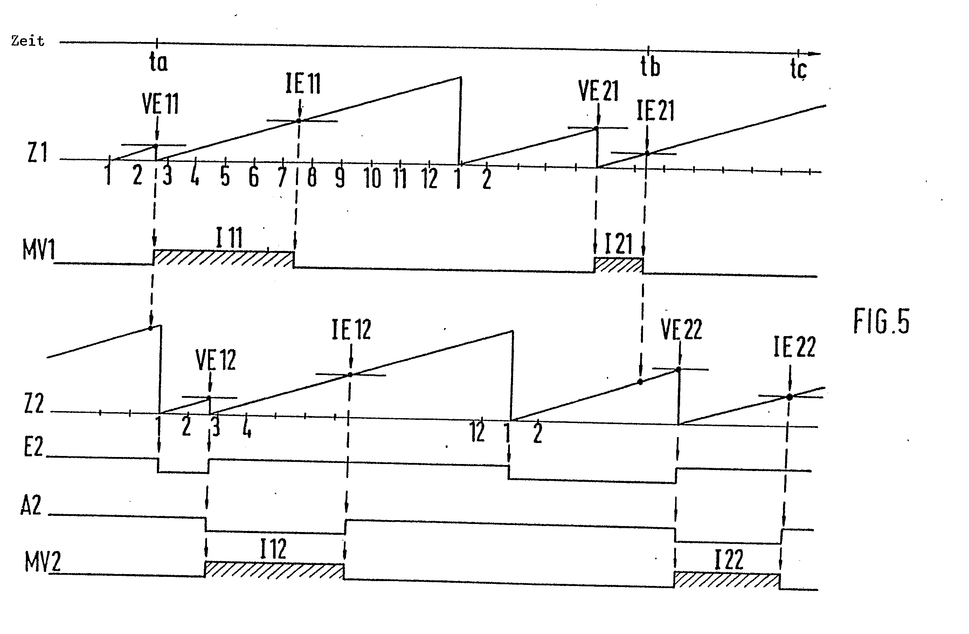

Figur 5 zeigt Details der Zeitsteuerung. Mit Hilfe dieser Zusatzmaßnahmen ist es möglich, das richtige Ein- und Ausschalten der Magnetventile sicher zu gewährleisten.

In der Figur 5 sind über der Zeitachse zwei beispielsweise mittels Programmierung realisierte Zähler aufgetragen, nämlich zum einen der zum Magnetventil 1, und damit zum Zylinder 1 gehörende Zähler Z1, sowie zum anderen der zum Magnetventil 2 und damit zum Zylinder 2 gehörende Zähler Z2. Weiter sind die beiden die Magnetventile 1 und 2 ansteuernden Signale MV1 und MV2 dargestellt, die den entsprechenden Signalen der Figur 4 entsprechen. Zuletzt ist in der Figur 5 über der Zeitachse ein Signal E2 und ein Signal A2 dargestellt, wobei es sich bei dem Signal E2 um eine Einschaltsperre für das Magnetventil 2 und bei dem Signal A2 um eine Ausschaltsperre für das Magnetventil 2 handelt. Insgesamt zeigen die beiden Signale MV1 und MV2 der Figur 5 jeweils zwei Zumeßimpulse, bzw. entsprechend der Figur 4 jeweils zwei Mengenimpulszeiten. Der Beginn eines solchen Zumeßimpulses ist definiert durch das Verzögerungszeitende VE, wohingegen das Ende des Zumeßimpulses durch das Mengenimpulsende IE eindeutig festgelegt ist. Da es sich wie gesagt um zwei Magnetventile, sowie um jeweils zwei Zumeßimpulse handelt, be-

...

deutet die erste Zahl hinter z.B. der Abkürzung VE die Kennzeichnung des Impulses, wohingegen die zweite Zahl das Magnetventil kennzeichnet. Aus diesem Grund ist auch der erste Zumeßimpuls des Magnetventils 1 mit I11 und der zweite Zumeßimpuls mit I21 in der Figur 5 ausgewiesen. Analoges gilt für das Magnetventil 2, das einen ersten Zumeßimpuls I12, sowie einen zweiten Zumeßimpuls I22 aufweist.

Die Funktionsweise der beiden Zähler Z1 und Z2 ist in der Figur 5 mit Hilfe von gleichmäßig steigenden Geraden dargestellt, wobei der jeweils vom Zähler auszuzählende Wert durch eine waagerechte Schwelle gekennzeichnet ist. Erreicht der Zähler diese Schwelle, so bedeutet dies, daß er entweder das Verzögerungszeitende VE oder das Mengenimpulszeitende IE erreicht hat. Mit Erreichen des Verzögerungszeitendes wird ein Interrupt für das Öffnen des zugehörigen Magnetventils ausgelöst, und gleichzeitig der Zähler zurückgesetzt. Das Erreichen des Mengenimpulszeitendes hingegen löst nur einen Interrupt zum Schließen des Magnetventils aus, der Zähler jedoch läuft unvermindert weiter bis zum nächsten Beginn einer Verzögerungszeit. Aus der Figur 5 geht nun hervor, daß z.B. die Einschaltsperre E2 für das Magnetventil 2 immer genau dann aktiv ist, wenn die Verzögerungszeit abläuft, wohingegen die Ausschaltsperre A2 des Magnetventils 2 genau dann das Ausschalten des Magnetventils verhindert, während die Mengenimpulszeit abläuft. Dadurch wird verhindert, daß das Magnetventil 2 z.B. im Zeitpunkt ta fälschlicherweise geöffnet wird, denn ohne die Einschaltsperre E2 würde das Magnetventil 2 im Zeitpunkt ta geöffnet werden, da das Magnetventil 1 geöffnet ist und der Zähler Z1 einen größeren Wert als die Schwelle VE12 aufweist. Analog würde ohne die Ausschaltsperre A2 das Magnetventil 2 im Zeitpunkt tc nicht ausgeschaltet werden, da es im Zeitpunkt tb schon "ausgeschaltet" worden wäre. In diesem Zeitpunkt tb ist das Magnetventil 2 wohl geschlossen, da jedoch

...

0191922

im Zeitpunkt tb auch das Magnetventil 1 geschlossen ist und der Zähler Z2 einen größeren Wert aufweist als die Schwelle IE22 würde schon im Zeitpunkt tb das Magnetventil 2 "wieder ausgeschaltet", auch wenn es gar nicht eingeschaltet ist, so daß das tatsächliche Ausschalten im Zeitpunkt nicht mehr möglich wäre. Analoge Ein- und Ausschaltsperren existieren auch für die restlichen Magnetventile, so daß auf diese Weise die einzelnen Magnetventile der Brennkraftmaschine vollkommen voneinander entkoppelt sind.

Insgesamt ist deshalb aufgrund der Ein- und Ausschaltsperre eines Magnetventils das Einschalten dieses Magnetventils nur dann möglich, wenn erstens das vorangehende Magnetventil als letztes geöffnet worden ist, zweitens das Verzögerungszeitende des betreffenden Magnetventils erreicht worden ist, und drittens der Zähler nach dem Erreichen des Verzögerungszeitendes wieder zurückgesetzt worden ist. Entsprechend ist das Ausschalten eines Magnetventils nur dann möglich, wenn erstens das vorangehende Magnetventil als letztes ausgeschaltet worden ist, zweitens das betreffende Magnetventil derzeit eingeschaltet ist, sowie drittens das Mengenimpulszeitende erreicht worden ist.

Es sei in diesem Zusammenhang noch darauf hingewiesen, daß es sich bei den Mengenimpulszeitenden der Figur 5 jeweils um das Ende der Feinauszählung der betreffenden Mengenimpulszeit handelt, diese Feinauszählung jedoch in der Figur 5 nicht näher dargestellt ist.

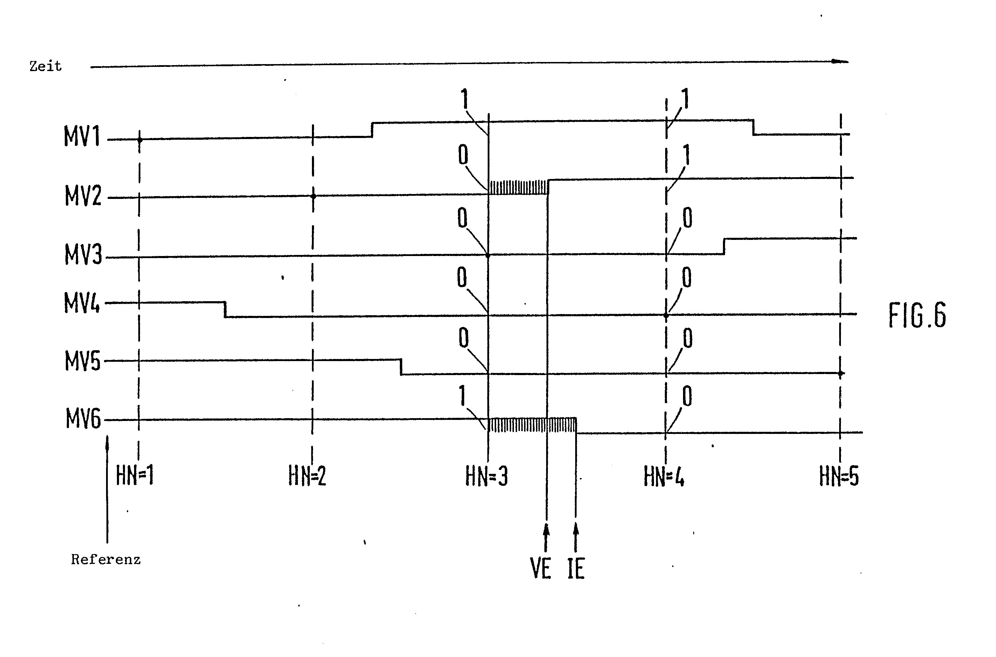

Figur 6 zeigt ein Zeitdiagramm einer alternativen Zeitsteuerung und/oder -regelung 24. In dieser Figur 6 sind über der Zeitachse die Signale MV1 bis MV6 zur Ansteuerung der Magnetventile der einzelnen Zylinder 1 bis 6 aufge-

...

tragen. Als besondere Zeitpunkte sind in der Figur 6 einerseits sogenannte Hubnummern HN eingetragen, sowie andererseits eine Referenz. Bei der zuletzt genannten Referenz
handelt es sich um ein Referenzsignal, wie es auch in
der Figur 4 auftritt. Die Hubnummern hingegen kennzeichnen jeweils einen Hub eines Nockens, so daß im Vergleich
zur Figur 4 immer der Bereich zweier Segmentsignale den
Abstand zweier Hubnummern ausmacht. Da es sich im Zusammenhang mit der Figur 6 wieder um eine sechs-zylindrige
Brennkraftmaschine handelt, wiederholen sich nach sechs
Hüben, also nach der Hubnummer HN = 6 sämtliche Vorgänge
wieder von vorne. Statt des Abstandes von Hub zu Hub können auch die Segmente oder andere, möglichst vorhandene
Drehzahlimpulse als Grobraster verwendet werden. Des weiteren sind in der Figur 6 auch noch die beiden Zeitpunkte
des Verzögerungszeitendes und des Mengenimpulszeitendes
durch zwei Pfeile gekennzeichnet.

Mit Hilfe der Referenz wird analog zur Figur 4 wieder jede
Hubnummer HN eindeutig einem Zylinder zugeordnet. Im beschriebenen Ausführungsbeispiel der Figur 6 entspricht
dabei die Hubnummer HN = 1 dem Zylinder 1, und damit auch
dem Signal MV1, usw. Für die weitere Erklärung der alternativen Zeitsteuerung und/oder -regelung 24 ist es notwendig,
eine Hubzahl HZ einzuführen. Bei dieser Hubzahl HZ handelt
es sich genau um die Anzahl von Hüben, welche die ·Verzögerungszeit vollständig durchläuft. Da nun bei der alternativen Zeitsteuerung gemäß der Figur 6 bei jeder Hubnummer HN genau eine Verzögerungszeit beginnen muß, ist
die Hubzahl HZ genau dann gleich eins, wenn die Verzögerungszeit länger ist als der Abstand zweier Hubnummern, jedoch kürzer als der Abstand von drei Hubnummern.
Die gesamte Verzögerungszeit bzw. die ganze Mengenimpulszeit setzt sich nun aus dem zeitlichen Abstand von zwei
oder mehreren Hubnummern, dem Grobraster sowie einer

...

Feinauszählung bis zum Wert der gewünschten Zeitdauer zusammen. Normalerweise genügt jedoch der Abstand zweier Hubnummern, so daß im Zeitpunkt des Auftretens jeder Hubnummer beide Zähler, also der Zähler für das Verzögerungszeitende, wie auch der Zähler für das Mengenimpulszeitende für die entsprechenden Magnetventile gemeinsam gestartet werden können. Durch die durch die beiden Zähler letztlich ausgelösten Unterbrechungssignale werden dann die entsprechenden Magnetventile geöffnet bzw. geschlossen. Die Auswahl der Magnetventile geschieht dabei mit Hilfe der folgenden Beziehungen. Beim Eintreffen eines Unterbrechungssignals aufgrund des Verzögerungszeitendes VE wird das (HN - HZ) -te Magnetventil eingeschaltet, während beim Eintreffen eines Unterbrechungssignals aufgrund des Mengenimpulszeitendes IE das (HN + Z/2)-te Magnetventil ausgeschaltet wird. Mit Z ist dabei die Anzahl der Zylinder der Brennkraftmaschine bezeichnet.

Als Beispiel soll der Zeitpunkt der Hubnummer HN = 3 nochmals genauer beschrieben werden. Der Zeitpunkt der Hubnummer HN = 3 ist dem Zylinder 3 zugeordnet, und damit auch dem Signal MV3, bzw. dem Segmentimpuls für den Zylinder 3 bzw. das Magnetventil 3. Im Zeitpunkt HN = 3 ist das Magnetventil 1 und das Magnetventil 6 eingeschaltet, während die restlichen Magnetventile ausgeschaltet sind. Weiter wird im Zeitpunkt HN = 3 eine Verzögerungszeit gestartet, und zwar die Grobauszählung der Verzögerungszeit für das Magnetventil 3, also die Verzögerungszeit des Signals MV3. Dies hat zur Folge, daß bei der vorhergehenden Hubnummer HN = 2 die Grobauszählung der Verzögerungszeit für das Signal MV2 begonnen haben muß, wobei diese Verzögerungszeit noch nicht beendet ist, da ja das Magnetventil 2 noch ausgeschaltet ist. Des weiteren werden im Zeitpunkt HN = 3 die Feinauszählung der Verzögerungszeit des Magnetventils 2 und der Mengenimpulszeit des Magnetventils 6 gestartet. Da nun, wie schon ausgeführt wurde, normalerweise

. . .

die Verzögerungszeit nur den Bereich zwischen zwei Hubnummern vollständig überstreicht, wobei maximal der Bereich von vier Hubnummern möglich ist, und da auch die Verzögerungszeit des Signals MV2 im Zeitpunkt HN = 2 gestartet wurde, gilt für die Hubzahl HZ normalerweise die Beziehung: HZ = 1. Daraus ergibt sich, daß gemäß der Festlegung (HN - HZ), das zweite Magnetventil eingeschaltet werden muß. Dieser Vorgang entspricht dem Signal MV2 der Figur 6. Gemäß der Festlegung (HN + Z/2) muß ebenfalls bei der beispielhaft verwendeten sechs-zylindrigen Brennkraftmaschine das sechste Magnetventil ausgeschaltet werden. Auch dies entspricht dem Signal MV6 der Figur 6. Insgesamt ergibt sich also aus der Figur 6, daß das nach dem Zeitpunkt HN = 3 auftretende Verzögerungszeitende VE zum Magnetventil 2 zugehörig ist, während das ebenfalls nach dem Zeitpunkt HN = 3 auftretende Mengenimpulszeitende IE zum Magnetventil 6 gehört. In analoger Weise kann auch in allen anderen durch das Auftreten von Hubnummern definierte Zeitpunkten die Zugehörigkeit der in diesen Zeitpunkten gestarteten Verzögerungszeiten und Mengenimpulszeiten zu den einzelnen Magnetventilen bestimmt werden. Dabei ist nur darauf zu achten, daß die beiden angegebenen Beziehungen in einer entsprechenden Weise, z.B. durch eine modulo-6-Rechnung, an die entsprechende Brennkraftmaschine angepaßt werden müssen.

Wie schon erwähnt wurde, überstreicht die Verzögerungszeit normalerweise immer den gleichen Abstand von Hubnummern vollständig, so daß die Hubzahl HZ normalerweise immer gleich ist. In diesem Betriebszustand der Brennkraftmaschine, der sich im wesentlichen mit dem stationären Betrieb der Brennkraftmaschine deckt, ist es nicht notwendig, im Zeitpunkt einer jeden Hubnummer die Zuordnung der zu startenden Verzögerungszeit und Mengenimpulszeit zu den einzelnen Magnetventilen neu zu berechnen, sondern in diesem stationären Zustand der Brennkraftmaschine

...

reicht es aus, die Verzögerungszeit und die Mengenimpulszeit auf das jeweils nächste Magnetventil zu
beziehen. Dies liegt daran, daß im stationären Betriebszustand der Brennkraftmaschine die Magnetventile
regelmäßig zyklisch nacheinander ein- und ausgeschaltet
werden. In der Figur 6 ist ein stationärer Betriebszustand
einer Brennkraftmaschine dargestellt, und das regelmäßige
Ein- und Ausschalten der Magnetventile ist in den beiden
Zeitpunkten HN = 3 und HN = 4 durch die Zahlen 1 und 0 angedeutet, wobei eine 1 ein eingeschaltetes Magnetventil
und eine 0 ein ausgeschaltetes Magnetventil darstellt.
Der Übergang vom Zeitpunkt HN = 3 zum Zeitpunkt HN = 4
ist gemäß der Figur 6 also einfach und ohne jegliche
Rechnung dadurch zu erreichen, daß das senkrechte Zahlenmuster der Einsen und Nullen um eine Stelle im Kreis
nach unten verschoben wird.

Im instationären Betriebszustand der Brennkraftmaschine
hingegen ist es möglich, daß die gewünschte Verzögerungszeit kleiner ist als der einfache Abstand zweier Hubnummern, oder größer ist als der doppelte Abstand zweier
Hubnummern. In diesen Fällen ist es notwendig, die Hubzahl HZ zu bestimmen, und daraus gemäß den beiden genannten Beziehungen die Magnetventile zu berechnen, die am
Ende der zu startenden Verzögerungszeit bzw. Mengenimpulszeit ein- und ausgeschaltet werden müssen. Insgesamt ist
es dadurch im instationären Betriebszustand der Brennkraftmaschine möglich, daß Verschiebungen und Überlappungen der Verzögerungs- und Mengenimpulszeiten der einzelnen
Signale zur Ansteuerung der Magnetventile auftreten.

Plötzliche Zumessungsänderungen können auch innerhalb
eines Grobrasters berücksichtigt werden, wenn ein gegebenenfalls vorhandener Periodendauerzähler zum Auszählen
des Zeitabstands der einzelnen Segmentimpulse des Segmentsignals durch das Überschreiten einer vorgebbaren Zumeß-

...

änderungsschwelle "fliegend" abgefragt werden kann. In diesem Fall kann bei plötzlichen Zumessungsänderungen mit Hilfe des gewonenen aktuellen Zumeßzeitpunktes die besagte Zumeßänderung berücksichtigt werden.

Bei der alternativen Zeitsteuerung gemäß der Figur 6 handelt es sich hauptsächlich um eine vereinfachte Möglichkeit der Auszählung der Verzögerungs- und der Mengenimpulszeit. Die Berechnung dieser Zeiten, wie auch die entsprechenden Reaktionen auf Laständerungen gemäß der Figur 4, sowie ebenfalls die Entkopplungen der Zeitsteuerung gemäß der Figur 5 können in analoger Weise, wie dies im Zusammenhang mit den genannten Figuren ausgeführt wurde, angewandt werden. Es ist jedoch möglich, daß im Falle der alternativen Zeitsteuerung gemäß der Figur 6 gewisse Anpassungen der Berechnungen und Reaktionen durchgeführt werden müssen. Ebenfalls ist es möglich, daß im Zusammenhang mit der alternativen Steuerung der Figur 6 auch die Ausführung der restlichen, der in der Figur 2 dargestellten Elemente an diese Zeitsteuerung angepaßt werden muß. Insbesondere ist dabei vor allem eine Änderung der funktionalen Umformungen, also der Kennfeldwerte gegebenenfalls notwendig.

Besonders vorteilhaft an der alternativen Zeitsteuerung gemäß der Figur 6 ist die Benutzung von Segmenten als Grobraster. Dies hat zur Folge, daß z.B. bei einer Realisierung der Zeitsteuerung mit Hilfe eines elektronischen Rechengeräts die z.B. programmierten Zähler für die Grobauszählung eingespart werden können. Ebenfalls werden auf diese Weise sämtliche Unterbrechungen die bisher aufgrund der Grobauszählung auftraten, vermieden. Bei der alternativen Zeitsteuerung gemäß der Figur 6 ist es insgesamt nur notwendig, zwei Zähler für die Feinauszählung der Verzögerungszeit und der Mengenimpulszeit vorzusehen. Besteht

...

dabei die Möglichkeit, den Zählerstand dieser Zähler fliegend abzulesen, also ohne die Zähler anzuhalten, so genügt
sogar ein einziger Zähler. Ein weiterer Vorteil der alternativen Zeitsteuerung ist in diesem Zusammenhang die höhere
Genauigkeit dieser Zeitsteuerung, insbesondere der Lage
des Zumeßimpulses, da nicht nur die Mengenimpulszeit im
Feinraster ausgezählt wird, sondern auch die Verzögerungszeit. Insgesamt ist es deshalb mit Hilfe der alternativen Zeitsteuerung möglich, die für die Ansteuerung
der Magnetventile der Brennkraftmaschine notwendige
Programmlaufzeit eines elektronischen Rechengeräts zu
verkürzen.

Wie im Zusammenhang mit der Beschreibung der Figuren 1
und 2 ausgeführt wurde, ist es notwendig, z.B. bei einer
Änderung des Förderendes FE die gewünschte, der Brennkraftmaschine zuzuführende Kraftstoffmenge QW mit Hilfe
der Korrekturmenge QD zu korrigieren. Während der Veränderung des Förderendes FE ist also die Gleichheit der
Wunschmenge QW und der Zumeßmenge QE nicht mehr gegeben.
Trotzdem bleibt jedoch aufgrund der Korrekturmenge QD
die Gleichheit der Wunschmenge QW und der tatsächlich
der Brennkraftmaschine zugeführten Kraftstoffmenge QK
erhalten.

Figur 7 zeigt Realisierungsmöglichkeiten der Korrektur
27. In dieser Figur 7 ist mit der Bezeichnung 50 eine
Eingangssignal-Umformung gekennzeichnet, deren Ausgangssignal an eine Korrekturrechnung 51 angeschlossen ist.
Das Eingangssignal der Umformung 50 ist dabei mit I1,
das Ausgangssignal mit I2 bezeichnet. Bei dem Ausgangssignal der Korrekturrechnung 51 hingegen handelt es sich
um ein Signal bezüglich der Korrekturmenge QD. Zuletzt
ist die Korrekturrechnung 51 außer vom Signal I2 auch noch
von weiteren, den Betriebszustand der Brennkraftmaschine
kennzeichnenden Eingangsgrößen beaufschlagt.

...

0191922

Eine erste Möglichkeit zur Erzeugung der Korrekturmenge QE kann mit Hilfe der folgenden Gleichung realisiert werden:

$$QD = K1. \arcsin (K2. \overline{\dot{ae}}).$$

Bei dieser ersten Möglichkeit wird also die Korrekturmenge QD in Abhängigkeit von der mittleren Regelstangengeschwindigkeit gewonnen. Selbstverständlich ist es bei der genannten Beziehung auch möglich, statt dem Signal ae das Signal aeist zu wählen. Im Zusammenhang mit der Figur 7 entspricht dort dem Signal ae bzw. aeist das Signal I1 und dem Signal $\dot{ae}$ bzw. $\overline{\dot{ae}}$ist das Signal I2. Die Eingangssignal-Umformung 50 der Figur 7 erzeugt also aus dem Regelweg ein Signal bezüglich der mittleren Regelweggeschwindigkeit, während die Korrekturrechnung 51 dann die verbleibende Berechnung gemäß der genannten Gleichung durchführt.

Als zweite Möglichkeit kann die Korrekturmenge QD gemäß der folgenden Gleichung berechnet werden:

$$QD = K1. \arcsin (K3. \quad ae).$$

Es wird also bei der vorliegenden Gleichung die Korrekturmenge in Abhängigkeit von der Veränderung des Regelwegs während zweier vorgegebener Zeitpunkte erzeugt. Selbstverständlich ist es auch hier möglich, statt dem Signal ae auch das Signal bezüglich des tatsächlichen Regelwegs aeist zu verwenden. Die Zuordnung der genannten Signale zu den Signalen der Figur 7 entspricht dabei der Zuordnung, wie sie im Zusammenhang mit der ersten Möglichkeit erläutert ist. Abschließend sei zu der ersten und der zweiten Realisierungsmöglichkeit der Figur 27 noch erwähnt, daß es sich bei den Bezeichnungen K1, K2 und K3 um konstante Werte handelt, die abhängig sind von den geometrischen Daten der Kraftstoffeinspritzpumpe.

Als dritte Möglichkeit zur Erzeugung der Korrekturmenge QD ist es möglich, in ähnlicher Weise wie bei der zweiten Möglichkeit schon erläutert, die Korrekturmenge QD dadurch zu erzeugen, daß jetzt statt dem Signal ae das Signal QS verwendet wird. Dies bedeutet also, daß dem Signal I1 der Figur 7 das Signal QS entspricht, daß aus diesem Signal die Umformung 50 als Ausgangssignal das Signal QS erzeugt, und daß die Korrekturrechnung 51 dann in Abhängigkeit von diesem QS die Korrekturmenge QD bildet. Selbstverständlich kann im Zusammenhang mit dieser dritten Realisierungsmöglichkeit die Differenzbildung, und damit das Signal QS auch, analog zur ersten Realisierungsmöglichkeit, durch das Signal $\overline{\dot{QS}}$ ersetzt werden.

Die vierte Möglichkeit für die Erzeugung der Korrekturmenge QD besteht darin, daß mit Hilfe der Umformung 5) deren Eingangssignal I1 = QS so verändert wird, daß d.. Ausgangssignal I2 dem Differenzsignal des tatsächlichen Regelwegs entspricht, also I2 = aeist. Die Nachbildung des Signals aeist kann z.B. mit Hilfe eines Verzögerungsglieds wenigstens erster Ordnung verwirklicht werden. Der besondere Vorteil dieser vierten Realisierungsmöglichkeit besteht darin, daß ein in der Regelung vorhandenes Signal, nämlich QS zur Berechnung verwendet werden kann, und trotzdem aufgrund der Nachbildung des Signals aeist die maximale Genauigkeit der Korrekturmenge QD erreicht wird.

Figur 8 zeigt ein Zeitdiagramm zur dritten und vierten Realisierungsmöglichkeit der Korrektur 27. Dabei zeigt die Figur 8a die Einspritzzeitpunkte und die Einspritzzeitdauer von Kraftstoff mit Hilfe des Zumeßventils in das Pumpenelement, jedoch ohne Korrektur, die Figur 8b die tatsächlich in die Brennkraftmaschine eingespritzte Kraftstoffmenge, wieder ohne Korrektur, die Figur 8c die Einspritzzeitpunkte und Einspritzzeitdauern von Kraftstoff in das Pumpenelement, jedoch

...

mit Korrektur, und schließlich die Figur 8d die Einspritzzeitpunkte und die Einspritzzeitdauern der tatsächlich in die Brennkraftmaschine eingespritzten Kraftstoffmenge QK, ebenfalls wieder mit Korrektur. Die einzelnen Einspritzzeitpunkte bzw. Einspritzzeitdauern sind in der Figur 8 mit Pfeilen dargestellt, wobei die Spitzen der Pfeile den Zumeßanfang bzw. das Zumeßende der Zuführung von Kraftstoff entweder in das Pumpenelement oder in den Brennraum der Brennkraftmaschine darstellen. Schließlich ist in der Figur 8 zur Kenntlichmachung der Korrektur ein Lastsprung vorgesehen, wobei die Bezeichnung t1 eine Einspritzung vor diesem Lastwechsel, die Bezeichnung t2 eine Einspritzung nach diesem Lastwechsel kennzeichnet.

Die Figur 8a zeigt die Einspritzzeitpunkte und die Einspritzdauern der Zuführung von Kraftstoff in die zu den einzelnen Zylindern gehörenden Pumpenelemente der Kraftstoffeinspritzpumpe. Wie der Figur 8a zu entnehmen ist, bewirkt der Lastsprung zwischen den beiden Einspritzungen t1 und t2 eine Verschiebung des Zumeßanfangs von Kraftstoff in die Pumpenelemente hin zu einem früheren, unerwünschten Zeitpunkt. Dies wird dadurch hervorgerufen, daß aufgrund des Lastsprungs sofort eine größere Kraftstoffmenge in das Pumpenelement zugemessen wird, ohne dabei eine Korrektur durchzuführen. Da als Folge des Lastsprungs nicht nur die Kraftstoffmenge verändert wird, sondern auch das Förderende an die neue einzuspritzende Kraftstoffmenge angepaßt wird, wird aufgrund der Veränderung des Förderendes in diesem Fall hin zu einem späteren Zeitpunkt die Sockelmenge im Pumpenelement kleiner, was eine vorübergehende Überhöhung der tatsächlich der Brennkraftmaschine eingespritzten Kraftstoffmenge bewirkt. Diese Vorgänge wurden im Zusammenhang mit der Figur 1 schon einmal näher erläutert. Die besagte Erhöhung der tatsächlich der Brennkraftmaschine einge-

...

spritzten Kraftstoffmenge QK aufgrund der Verminderung
der Sockelmenge QS durch die Verstellung des Förderendes FE hin zu einem späteren Zeitpunkt, diese ungewünschte Kraftstoffmenge ist in der Figur 8b mit der
Bezeichnung QV gekennzeichnet. In der Darstellung der
Figur 8b wird demnach zuviel Kraftstoff in die Brennkraftmaschine eingespritzt, was darauf zurückzuführen
ist, daß keine Korrektur stattfindet. Die Figur 8c zeigt
die Einspritzzeitpunkte und die Einspritzdauern für die
Zumessung von Kraftstoff in das Pumpenelement, dieses
Mal jedoch mit einer Korrektur dieser Zumeßmenge. In
der Figur 8c ist deshalb die tatsächlich mit Hilfe des
Zumeßventils in das Pumpenelement zugemessene Kraftstoffmenge mit QE bezeichnet, während die im Vergleich
zur Figur 8a abgezogene Kraftstoffmenge mit QD gekennzeichnet ist. Bei der Kraftstoffmenge QD handelt es
sich um die schon mehrfach erwähnte Korrekturmenge
QD, die z.B. mit Hilfe der bereits beschriebenen Korrekturmöglichkeiten erzeugt werden kann. Zuletzt zeigt
die Figur 8d die Einspritzzeitpunkte und die Einspritzdauern der tatsächlich der Brennkraftmaschine eingespritzten Kraftstoffmenge QK mit Korrektur der vom Zumeßventil dem Pumpenelement zugemessenen Kraftstoffmengen. Analog wie die Figur 8b im Zusammenhang mit der
Figur 8a betrachtet werden mußte, ist deshalb die Figur
8d direkt der Figur 8c zuzuordnen. Aus der Figur 8d ist
nun zu erkennen, daß aufgrund der in der Figur 8c dargestellten Korrekturmenge QD die der Brennkraftmaschine
tatsächlich eingespritzte Kraftstoffmenge nicht vorübergehend überhöht ist, wie dies in der Figur 8b der Fall
war, sondern daß in der Figur 8d die Kraftstoffmenge QK
zuerst einen kleinen Sprung direkt nach dem Lastwechsel
macht, um dann langsam auf die gewünschte, der Brennkraftmaschine einzuspritzende Kraftstoffmenge anzuwachsen.

...

Insgesamt ist es also mit Hilfe der Korrekturmenge QD möglich, bei Lastsprüngen und damit verbundenen Förderende-Änderungen eine Überhöhung der tatsächlich der Brennkraftmaschine eingespritzten Kraftstoffmenge und einen zu frühen Zumeß- bzw. Förderbeginn zu vermeiden und gleichzeitig die Einspritzung so zu beeinflussen, daß die tatsächlich der Brennkraftmaschine eingespritzte Kraftstoffmenge langsam auf den Wert der gewünschten der Brennkraftmaschine einzuspritzenden Kraftstoffmenge ansteigt.

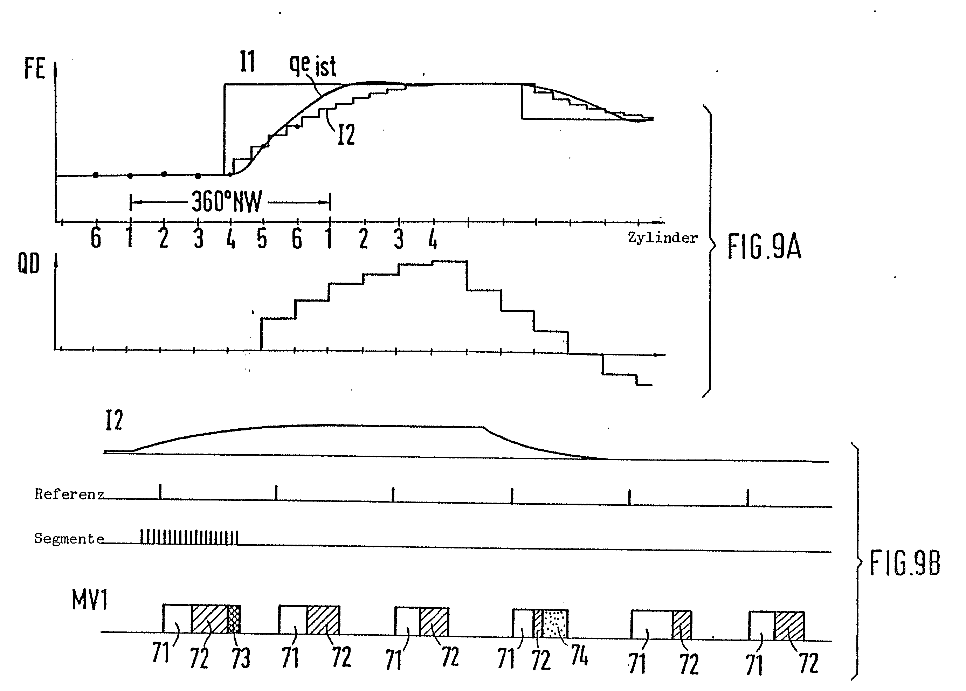

Figur 9 zeigt Zeitdiagramme zur vierten Realisierungsmöglichkeit der Korrektur 27. Dabei sind in der Figur 9a zum einen die Nachbildung des Signals I1 durch das Signal I2 dargestellt, sowie zum anderen das gemäß der Figur 7 in Abhängigkeit vom Signal I2 erzeugte Signal QD. Sämtliche Signale sind über der Zeitachse aufgetragen, wobei diese Zeitachse durch die Abfolge der Zylinder der Brennkraftmaschine gekennzeichnet ist.

Gemäß den Ausführungen zur Figur 7 handelt es sich bei der vierten Realisierungsmöglichkeit der Korrektur 27 bei dem Signal I1 um das Signal bezüglich der Sockelmenge QS, und bei dem Signal I2 um eine Nachbildung des Signals bezüglich des tatsächlichen Stellwinkels des Pumpenkolbens aeist. Dieser Zusammenhang, vor allem die Nachbildung des Signals aeist durch das Signal I2 ist dem oberen Diagramm der Figur 9a zu entnehmen. Wie ebenfalls aus der Beschreibung der vierten Realisierungsmöglichkeit der Korrektur 27 hervorgeht, wird das Signal bezüglich der Korrekturmenge QD dann in Abhängigkeit von den Differenzen des nachgebildeten Signals I2 erzeugt, wobei die Differenz immer aus zwei Werten gewonnen werden, die zu Zeitpunkten gehören, die eine Zylinderumdrehung auseinanderliegen. Das Signal QD ist im unteren der beiden Diagramme der Figur 9a beispielhaft aufgetragen. Die

...

Figur 9b zeigt in seinem obersten Diagramm ebenfalls das
Signal I2, jedoch in einem anderen Maßstab, wie dies in der
Figur 9a der Fall war. Weiter sind in der Figur 9b auch
noch die Referenzsignale und die Segmentsignale dargestellt,
wie dies auch schon im Zusammenhang mit der Figur 4 erläutert wurde. Zuletzt zeigt die Figur 9b auch noch beispielhaft das Signal MV1, das, wie auch schon im Zusammenhang mit der Figur 4 erläutert wurde, zur Ansteuerung des zum Zylinder 1 gehörenden Magnetventils dient.
Bei der Darstellung dieses Signals MV1 ist mit dem Bezugszeichen 71 jeweils eine Verzögerungszeit gekennzeichnet,
mit dem Bezugzeichen 72 eine Mengenimpulszeit ohne Korrektur, während mit dem Bezugzeichen 73 eine Mengenimpulszeitverlängerung aufgrund der Korrektur und mit dem Bezugzeichen 74 eine Mengenimpulszeitverkürzung ebenfalls
aufgrund der Korrektur jeweils ausgezeichnet sind.

Wie schon ausgeführt wurde, ergibt sich z.B. gemäß der
Figur 9a aufgrund des Signals I2 eine Korrekturmenge QD,
die positiv oder negativ sein kann, also die eigentliche
Mengenimpulszeit 72 verlängern (73) oder verkürzen (74)
kann. Vergrößert sich nun in der Figur 9b das Signal I2,
so hat dies zur Folge, daß die eigentliche Mengenimpulszeit 72 aufgrund der Korrektur verlängert wird, während
eine Verringerung des Signals I2 eine Verkürzung (74)
der eigentlichen Mengenimpulszeit 72 aufgrund der Korrektur nach sich zieht.

Insgesamt ist es also mit Hilfe der vierten Realisierungsmöglichkeit der Korrektur 27 möglich, Abweichungen der
tatsächlich eingespritzten Kraftstoffmenge von der gewünschten einzuspritzenden Kraftstoffmenge zu vermeiden.
Dies wird, wie in der Figur 9 dargestellt, durch die
Nachbildung des tatsächlichen Stellwinkels des Pumpenkolbens und die davon abhängige Verlängerung oder Verkürzung der eigentlichen Mengenimpulszeit erreicht.

...

Im Zusammenhang mit den bisher beschriebenen Figuren 1
bis 9 ist es nun möglich, das erfindungsgemäße Verfahren bzw. die erfindungsgemäße Einrichtung zur Steuerung
und/oder Regelung der Kraftstoffzumessung in eine Brennkraftmaschine um weitere Funktionen zu erweitern. Damit
z.B. nach dem Abschalten der Batteriespannung und der
damit einhergehenden Verstellung des Förderendes hin zu
späteren Zeitpunkten aufgrund der eingespritzen Sockelmenge keine vorübergehende Einspritzmengenüberhöhung
entsteht, ist es besonders vorteilhaft, die Versorgungsspannung des Verstellwerk 23 für den Pumpenkolben 14
im Vergleich zur Endstufe 25 für das Zumeßventil 10 der
Figur 2 verzögert abzuschalten. Die Verzögerung kann
dabei mit Hilfe eines entsprechenden Relais durchgeführt
werden, das z.B. zusätzlich auch noch von der Drehzahl
der Brennkraftmaschine abhängig gemacht werden kann.
Ebenfalls ist es besonders vorteilhaft, die Zumeßmenge
der Figur 2 noch in Abhängigkeit von der zur Verfügung
stehenden Batteriespannung des Kraftfahrzeugs und/oder
in Abhängigkeit von der Temperatur des Kraftstoffs zu
korrigieren. Beide Korrekturen können z.B. mit Hilfe von
wenigstens zweidimensionalen Kennfeldern realisiert
werden, wobei hier ebenfalls noch weitere Betriebskengrößen der Brennkraftmaschine so z.B. die Belastung der
Brennkraftmaschine und/oder die Drehzahl der Brennkraftmaschine berücksichtigt werden können. Treten innerhalb
der Regelung der Figur 2 über eine längere, vorgebbare
Zeitdauer Regelabweichungen auf, die einen vorgebbaren
Grenzwert andauernd überschreiten, so ist es in besonders vorteilhafter Art und Weise möglich, das weiterhin
sichere Funktionieren der Einrichtung dadurch zu gewährleisten, daß die der Brennkraftmaschine zuzumessende
Kraftstoffmenge reduziert wird. Eine derartige Mengenreduzierung kann auch als weitere Sicherheitsvorrich-

. . .

tung bei Drehzahlen, die bestimmte, vorgebbare Grenzdrehzahlen überschreiten, aktiv werden, um damit die
Drehzahl der Brennkraftmaschine unterhalb des genannten
Grenzwerts zu halten. Analog dazu ist es ebenfalls möglich, z.B. mit Hilfe eines geschwindigkeitsabhängigen
Begrenzungskennfelds und einer nachfolgenden Minimalauswahlstufe, die Fahrgeschwindigkeit des von der Brennkraftmaschine angetriebenen Kraftfahrzeugs unterhalb
von bestimmten, vorgebbaren Schwellen zu halten. Insgesamt ist es also mit Hilfe der Erfindung möglich, nicht
nur die gewünschte, der Brennkraftmaschine zuzuführende
Kraftstoffmenge im richtigen Augenblick den Brennräumen
der Brennkraftmaschine zuzuführen, sonders es ist ebenfalls in besonders vorteilhafter Weise möglich, diese
Einspritzung von Kraftstoff in die Brennkraftmaschine
mittels einfacher Sicherheitsvorrichtungen gezielt zu
überwachen. Die Realisierung der gesamten Erfindung ist,
wie eingangs schon erwähnt wurde, in besonders vorteilhafter Weise mit Hilfe eines elektronischen Rechengeräts, also z,B. mit Hilfe eines entsprechend programmierten Mikroprozessor möglich. Damit im Zusammenhang mit
dieser Realisierung ein sicheres Arbeiten der gesamten
Regelung gewährleistet ist, ist es von großem Vorteil
die einzelnen Aufgaben und Funktionen der Regelung auf
zwei miteinander gekoppelte Mikroprozessoren zu verteilen. Die Verteilung der Aufgabe, wie auch die Kopplung der Prozessoren ist dabei auf verschiedene Arten
und Weisen möglich, die jedoch für einen Fachmann auf
diesem Gebiet keine grundlegenden Probleme aufwerfen.
Auch die Umsetzung der beschriebenen Figuren 1 bis 9
sind für einem Fachmann ohne weitere erfinderische
Tätigkeiten möglich. Die Auswahl der für den jeweiligen
Fall vorteilhaftesten Alternativen, wie auch z.B. die
Auswahl ob fest programmierte Zähler oder fest verdrahtete Zähler verwendet werden, hängt vom jeweiligen
Anwendungsfall und den dabei vorgegebenen Randbedingungen ab.

R. 1 9 9 2 2    0191922

13.11.1984 Sr/Hm

ROBERT BOSCH GMBH, 7000 STUTTGART 1

Ansprüche

1. Verfahren zur Steuerung und/oder Regelung der Kraftstoffzumessung in eine Brennkraftmaschine mit einer Kraftstoffeinspritzpumpe, die wenigstens in Abhängigkeit von
einem elektrisch ansteuerbaren Zumeßventil und einem
elektrisch verstellbaren Pumpenkolben die Einspritzung
von Kraftstoff in den Zylinder der Brennkraftmaschine durchführt, sowie mit einem Rückführspeicher, der mit der Kraftstoffeinspritzpumpe in Wirkverbindung steht, dadurch gekennzeichnet, daß in einem ersten Schritt ein Signal zur
Ansteuerung des Magnetventils gebildet wird, und daß in
einem zweiten Schritt ein Signal zur Ansteuerung des Pumpenkolbens wenigstens in Abhängigkeit von dem Signal zur
Ansteuerung des Magnetventils erzeugt wird.

2. Verfahren nach Anspruch 1, dadurch gekennzeichnet,
daß das Signal zur Ansteuerung des Magnetventils abhängig ist von wenigstens einer Betriebskenngröße der
Brennkraftmaschine.

3. Verfahren nach Anspruch 2, dadurch gekennzeichnet,
daß es sich bei der Betriebskenngröße der Brennkraftmaschine um die Stellung des Fahrpedals handelt.

4. Verfahren nach wenigstens einem der Ansprüche 1
bis 3, dadurch gekennzeichnet, daß das Signal zur
Ansteuerung des Magnetventils korrigiert wird.

. . .

5. Verfahren nach Anspruch 4, dadurch gekennzeichnet, daß das korrigierte Signal zur Ansteuerung des Magnetventils als Sollsignal für die Steuerung des Zumeßventils dient.

6. Verfahren nach Anspruch 4, dadurch gekennzeichnet, daß das korrigierte Signal zur Ansteuerung des Magnetventils als Sollsignal für die Regelung des Zumeßventils herangezogen wird.

7. Verfahren nach Anspruch 6, dadurch gekennzeichnet, daß für die Regelung des Zumeßventils des weiteren ein Istsignal erzeugt wird, das den Betriebszustand des Zumeßventils darstellt.

8. Verfahren nach wenigstens einem der Ansprüche 1 bis 7, dadurch gekennzeichnet, daß das Signal zur Ansteuerung des Pumpenkolbens des weiteren abhängig ist von Betriebskenngrößen der Brennkraftmaschine.

9. Verfahren nach Anspruch 8, dadurch gekennzeichnet, daß das Signal zur Ansteuerung des Pumpenkolbens als Sollsignal für die Steuerung des verstellbaren Pumpenkolbens dient.

10. Verfahren nach Anspruch 8, dadurch gekennzeichnet, daß das Signal zur Ansteuerung des Pumpenkolbens als Sollsignal für die Regelung des verstellbaren Pumpenkolbens herangezogen wird.

11. Verfahren nach Anspruch 10, dadurch gekennzeichnet, daß des weiteren zur Regelung des verstellbaren Pumpenkolbens ein Istsignal erzeugt wird, das den Betriebszustand des verstellbaren Pumpenkolbens anzeigt.

12. Einrichtung zur Durchführung des Verfahrens zur Steuerung und/oder Regelung der Kraftstoffzumessung in eine Brennkraftmaschine nach wenigstens einem der Ansprüche 1 bis 11, mit einer Kraftstoffeinspritzpumpe, die wenigstens

...

in Abhängigkeit von einem elektrisch ansteuerbaren Zumeßventil und einem elektrisch verstellbaren Pumpenkolben
die Einspritzung von Kraftstoff in den Zylinder der Brennkraftmaschine durchführt, sowie mit einem Rückführspeicher,
der mit der Kraftstoffeinspritzpumpe in Wirkverbindung steht,
dadurch gekennzeichnet, daß wenigstens ein elektronisches
Rechengerät vorhanden ist, das Signale zur Ansteuerung des
Magnetventils und des Pumpenkolbens erzeugt.

FIG.1A  FIG.1B  FIG.1C  FIG.1D  FIG.1D

0191922

FIG.2

N, FP, …

20

N, T, P …

QW

21

QS

22

ae

23

26

QD

27

QE

24

ti

25

28

QK
FE

22

FIG.3A

ae ist

31

QS

30

32

ae

22

SB ist

34

QS

33

35

36

38

37

ae ist

ae

FIG.3B

FIG.4A

FIG.4B

0191922

FIG.5

FIG.6

FIG.7

FIG.8A

FIG.8B

FIG.8C

FIG.8D

FE

I1  qe ist

I2

360°NW

6 1 2 3 4 5 6 1 2 3 4    Zylinder

FIG.9A

QD

I2

Referenz

Segmente

FIG.9B

MV1

71 72 73  71 72  71 72  71 72 74  71 72  71 72

0191922